Europäisches Patentamt

European Patent Office

Office européen des brevets

(19)

(11)  EP 0 971 932 B1

(12)  FASCICULE DE BREVET EUROPEEN

(45) Date de publication et mention
de la délivrance du brevet:
**05.06.2002  Bulletin 2002/23**

(21) Numéro de dépôt: **98917238.2**

(22) Date de dépôt: **26.03.1998**

(51) Int Cl.[7]: **C07F 7/12**

(86) Numéro de dépôt international:
**PCT/FR98/00610**

(87) Numéro de publication internationale:
**WO 98/43984 (08.10.1998 Gazette 1998/40)**

(54) **PROCEDE D'OBTENTION D'ORGANOSILANES METTANT EN OEUVRE UNE REACTION DE REDISTRIBUTION**

VERFAHREN ZUR HERSTELLUNG VON ORGANOSILANEN DURCH EINER REDISTRIBUTIONSREAKTIONS

METHOD FOR OBTAINING ORGANOSILANES USING A DISTRIBUTION REACTION

(84) Etats contractants désignés:
**DE FR GB**

(30) Priorité:  **27.03.1997  FR 9704018**

(43) Date de publication de la demande:
**19.01.2000  Bulletin 2000/03**

(73) Titulaire: **RHODIA CHIMIE**
**92408 Courbevoie Cédex (FR)**

(72) Inventeur: **COLIN, Pascale**
**F-69680 Chassieu (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 147 834       EP-A- 0 743 315**
**FR-A- 2 119 477**

**Description**

La présente invention a pour objet un procédé amélioré d'obtention d'organosilanes et concerne particulièrement un procédé amélioré d'obtention d'organosilanes dans lequel intervient une réaction dite de redistribution. Plus particulièrement, la présente invention concerne un procédé amélioré d'obtention d'organosilanes dans lequel intervient, une réaction de redistribution entre un organohydrogénosilane chloré et un silane organo-substitué et éventuellement chloré pour aboutir à un produit comprenant un organohydrogénosilane chloré redistribué, que l'on extrait du milieu réactionnel par distillation.

Sans que cela ne soit limitatif, la présente invention vise tout spécialement une réaction de redistribution entre un alkylhydrogénodichlorosilane et un trialkylchlorosilane pour aboutir à un produit comprenant un dialkylhydrogénochlorosilane redistribué. Ce dialkylhydrogénochlorosilane redistribué est un agent de synthèse particulièrement apprécié dans des applications très nombreuses et variées, par exemple de préparation de monomères organosiliciques ou de composés de base plus condensés.

Le dialkylhydrogénochlorosilane est l'un des sous-produits de la synthèse des alkylchlorosilanes, selon un mode opératoire classique et bien connu qui consiste à faire réagir du chlorure d'alkyle avec du silicium, en présence d'un catalyseur au cuivre, pour former des alkylchlorosilanes. Dans cette synthèse, le dialkyldichlorosilane est le principal produit. On obtient aussi, outre le sous-produit dialkylhydrogénochlorosilane susvisé, des composés du type trialkylchlorosilane, alkyltrichlorosilane et alkylhydrogénodichlorosilane.

Compte-tenu de l'intérêt industriel de ces sous-produits dans la chimie des silicones, et notamment du dialkylhydrogénochlorosilane comme le diméthylhydrogénochlorosilane, de nombreuses propositions de mode opératoire d'obtention de ces sous-produits, ont vu le jour. L'une des seules qui ait fait ces preuves en la matière, est celle consistant à faire intervenir une réaction de redistribution entre, par exemple, un alkylhydrogénodichlorosilane et un trialkylchlorosilane ou entre un alkylhydrogénodichlorosilane et un tétraalkylsilane Cette redistribution conduit aux dialkylhydrogénochlorosilanes visés, que l'on extrait du milieu réactionnel par distillation.

On connaît dans ce contexte de nombreuses réactions de redistribution des organosilanes, coupant et redistribuant les liaisons silicium-alkyle, silicium-chlore, silicium-hydrogène, en présence de divers catalyseurs tels que des acides de Lewis. Le brevet français FR-A-2 119 477 illustre bien cette technique de préparation de dialkylhydrogénochlorosilane par redistribution/distillation. Conformément à l'enseignement de ce brevet, du méthylhydrogénodichlorosilane et du triméthylchlorosilane sont mis à réagir dans un rapport molaire méthylhydrogénodichlorosilane/triméthylchlorosilane de l'ordre de 0,5 et en présence d'un catalyseur formé par $AlCl_3$. Le mélange réactionnel est placé dans un réacteur, sous une pression autogène de l'ordre de 3 à 5 x $10^5$Pa, et maintenu pendant plusieurs heures, à une température de l'ordre de 85 à 170°C. La Demanderesse a reproduit ce mode opératoire de l'art antérieur et elle a observé qu'il s'agit là d'une réaction en catalyse homogène où les substances réagissantes et le catalyseur forment une seule phase liquide. Après mise en oeuvre de la réaction de redistribution, le diméthylhydrogénochlorosilane redistribué est séparé du mélange réactionnel par distillation, et, à l'issue de l'étape de distillation, il reste un culot de distillation comprenant le catalyseur. Ledit culot se présente généralement sous forme d'une suspension car une partie plus ou moins importante du catalyseur (cela va dépendre de la quantité mise en oeuvre au départ) se trouve à l'état solide dans le culot. En fin de procédé, du fait du double état dans lequel se trouve le catalyseur (état solide et état dissous), la séparation de $AlCl_3$ est rendue difficile, ce qui complique notablement la mise en oeuvre du procédé, et il est plus rapide alors de détruire le catalyseur en faisant une hydrolyse acide ou basique du culot de distillation. Il doit être cependant considéré que de tels résultats ne sont pas satisfaisants sur le plan de la rentabilité industrielle : le chlorure d'aluminium ne peut pas être recyclé du fait de son hydrolyse et, de plus, se pose le problème des effluents aqueux qui peuvent être embarrassants.

Dans cet état de connaissances, l'un des objectifs essentiel de la présente invention consiste dans la mise au point d'un procédé nouveau d'obtention d'organosilanes dans lequel intervient une réaction de redistribution en catalyse hétérogène entre un organohydrogénosilane chloré et un silane organo-substitué et éventuellement chloré. Ce nouveau procédé, se doit de mettre en oeuvre un catalyseur qui reste à l'état solide en présence des substances réagissantes et de conduire en fin de réaction à un milieu réactionnel comportant une phase solide, le catalyseur, qui peut aisément être recyclé en totalité dans une nouvelle opération et une phase liquide comprenant un organohydrogénosilane chloré redistribué qui est récupéré de manière classique par distillation (par exemple).

Un autre objectif essentiel de l'invention est de proposer un procédé de type de celui visé ci-dessus et qui soit particulièrement simple à mettre en oeuvre et économique.

Ces différents objectifs sont atteints par la mise en oeuvre du procédé selon l'invention qui fait appel à l'emploi d'une quantité efficace d'un catalyseur à base d'alumine.

Le document EP-A-0 743 315 a proposé un procédé de redistribution d'un mélange de méthylsilanes par catalyse hétérogène sur alumine, en vue d'enrichir ce mélange en diméthylhydrogénochlorosilane et/ou en triméthylchlorosilane. Les produits de départ mentionnés dans cet art antérieur ne concement que les mélanges de méthylchlorosilanes (au nombre de 5 environ) et de tétraméthylsilane de bas points d'ébullition (il s'agit de méthylsilanes bouillant entre 35 et 70°C sous la pression atmosphérique) tels qu'ils sont séparés par distillation du mélange brut issu de la synthèse directe de Rochow consistant à faire réagir du chlorure de méthyle sur une masse de contact composée de silicium et d'un catalyseur. Cet art antérieur est absolument muet sur la possibilité de faire appel à une catalyse hétérogène sur alumine pour assister une réaction de redistribution spécifique, comme celle mise en oeuvre dans le procédé selon l'invention, où l'on met en contact deux organosilanes purs, préalablement séparés de leur milieu de préparation, consistant dans un organohydrogénosilane chloré et un silane organo-substitué et éventuellement chloré.

Le document EP-A-0 147 834 fait aussi de la redistribution sur alumine en phase hétérogène. Mais cet autre art antérieur est là aussi muet sur une réaction de redistribution spécifique, comme celle mise en oeuvre dans le procédé selon l'invention.

Le mérite de la Demanderesse ne s'est pas limité à cette mise à jour de la possibilité de faire appel à une catalyse hétérogène sur alumine pour assister une réaction de redistribution spécifique entre deux organosilanes pris à l'état pur. En effet, de manière tout à fait surprenante, la Demanderesse a également trouvé que l'alumine, pour remplir correctement son rôle de catalyseur hétérogène dans une réaction de redistribution spécifique, se doit de répondre à des caractéristiques bien définies.

Il s'ensuit que la présente invention concerne un procédé d'obtention d'organosilanes comprenant une réaction de redistribution entre un organohydrogénosilane chloré de formule (1) $(R)_a(H)_b SiCl_{4-a-b}$ et un silane organo-substitué et éventuellement chloré de formule (2) $(R')_c SiCl_{4-c}$, formules dans lesquelles : a = 1 ou 2, b = 1 ou 2, a + b ≤ 3, c = 1, 2, 3 ou 4, les symboles R et R' sont semblables ou différents et représentent chacun un radical alkyle linéaire ou ramifié en $C_1$-$C_6$ ou un radical aryle en $C_6$-$C_{12}$, cette réaction de redistribution se déroulant en présence d'une quantité efficace d'un catalyseur à base d'un dérivé métallique, et ledit procédé étant caractérisé en ce que le catalyseur reste à l'état solide en présence des silanes réagissants (1) et (2) et consiste dans une alumine qui présente une teneur en métal alcalin M ou alcalino-terreux M', exprimée en ppm d'oxyde $M_2O$ ou M'O par rapport au poids de catalyseur (alumine comprenant notamment M ou M'), égale ou inférieure à 500 ppm.

Selon un mode préféré de mise en oeuvre de l'invention, l'alumine utilisée présente une teneur en métal alcalin ou alcalino-terreux qui est égale ou inférieure à 300 ppm, de préférence égale ou inférieure à 100 ppm.

En raison de leurs principaux procédés de fabrication, les alumines mises en oeuvre dans le présent procédé contiennent le plus souvent du sodium, dont la teneur sera alors exprimée en ppm de $Na_2O$ par rapport au poids de l'alumine.

La Demanderesse fera noter que l'alumine mise en oeuvre dans son procédé, qui présente une teneur en métal alcalin ou alcalino-terreux située dans les intervalles de valeurs indiquées ci-avant, peut avantageusement comprendre en outre dans sa structure une entité dopante consistant dans au moins un atome d'halogène (comme par exemple un atome de chlore) et/ou dans au moins un atome d'un méta! choisi dans le groupe des éléments des colonnes 5b et 6b et leurs mélanges (comme par exemple le niobium, le molybdène, le tungstène), avec la condition selon laquelle la teneur en entité dopante, quand il y en a, exprimée en % en poids d'atome(s) halogène et/ou d'atome (s) métallique(s) par rapport au poids de catalyseur (alumine comprenant l'entité dopante), est égale ou inférieure à 50 %, de préférence égale ou inférieure à 30 % et plus préférentiellement encore située dans l'intervalle allant de 0,1 à 20 %.

Pour la définition des éléments des colonnes 5b et 6b, on se réfère à la Classification Périodique des Eléments telle que publiée dans l'ouvrage "Handbook of Chemistry and Physics", 51ème édition, 1970 - 1971, édité par "The Chemical Rubber CO".

Selon un mode plus préféré encore de mise en oeuvre de l'invention, l'alumine utilisée, non seulement présente une teneur en métal alcalin ou alcalino-terreux et éventuellement une teneur en entité dopante situées dans les intervalles de valeurs indiquées ci-avant, mais encore elle possède :

(i)

- une surface spécifique BET égale ou supérieure à 50 m²/g, et
- un volume poreux total égal ou supérieur à 15 ml/100 g,

(2i) de préférence :

- une surface spécifique BET égale ou supérieure à 80 m²/g, et
- un volume poreux total allant de 20 à 120 ml/100 g,

(3i) et plus préférentiellement encore :

- une surface spécifique BET allant de 100 à 600 m²/g, et
- un volume poreux total allant de 25 à 80 ml/100 g.

La surface spécifique BET est la surface spécifique déterminée par adsorption d'azote conformément à la norme ASTM D 3663-78 établie à partir de la méthode BRUNAUER-EMMETT-TELLER décrite dans le périodique "The Journal of the American Society", 60, 309 (1938).

Le volume poreux total (VPT) est mesuré de la façon suivante : on détermine la valeur de la densité de grain (Dg) et de la densité absolue (Da) en utilisant la méthode de picnométrie en faisant appel au mercure dans le cas de la densité de grain et à l'hélium dans le cas de la densité absolue ; le VPT est donné par la formule :

$$VPT = \frac{1}{Dg} - \frac{1}{Da}$$

Le catalyseur à base d'alumine peut être mis en oeuvre sous diverses formes telles que poudre, billes, concassés, extrudés, pastilles, la mise en forme pouvant éventuellement être réalisée à l'aide d'un liant.

La poudre d'alumine peut être obtenue par des procédés classiques, notamment par déshydratation rapide d'une alumine hydratée ou d'un hydroxyde d'aluminium se présentant sous forme par exemple d'hydrargillite. En particulier, on peut préparer les alumines mises en oeuvre dans le présent procédé par mise en contact d'une alumine hydratée, sous forme finement divisée, avec un courant de gaz chaud à une température comprise entre 400°C et 1000°C, puis maintien du contact entre l'hydrate et les gaz pendant une durée allant d'une fraction de seconde jusqu'à 10 secondes (étape dite de "flashage") et enfin séparation de l'alumine partiellement déshydratée et des gaz chauds. On peut notamment se référer au procédé décrit dans le brevet américain US-A-2 915 365.

On peut également procéder à l'autoclavage d'agglomérés des alumines obtenues précédemment, en milieu aqueux, éventuellement en présence d'acide, à une température supérieure à 100°C et de préférence comprise entre 150°C et 250°C, pendant une durée de préférence comprise entre 1 et 20 heures, puis à leur séchage et leur calcination.

La température et la durée de la calcination sont réglées de telle façon que l'on obtienne des surfaces spécifiques situées dans les zones de valeurs indiquées ci-avant.

Il peut s'agir encore de billes d'alumine issues d'une mise en forme par oil-drop (ou coagulation en gouttes). Ce type de billes peut par exemple être préparé par un procédé selon l'enseignement des brevets EP-A-0 015 801 ou EP-A-0 097 539. Le contrôle de la porosité peut être réalisé en particulier, selon le procédé décrit dans le brevet EP-A-0 097 539, par coagulation en gouttes d'une suspension ou d'une dispersion aqueuse d'alumine ou d'une solution d'un sel basique d'aluminium se présentant sous la forme d'une émulsion constituée d'une phase organique, d'une phase aqueuse et d'un agent de surface ou d'un émulsionnant. Ladite phase organique peut en particulier être un hydrocarbure.

Il peut également s'agir de concassés d'alumine. Ces concassés peuvent être issus du concassage de tout type de matière à base d'alumine telle que, par exemple, des billes obtenues par tous types de procédé (oil-drop, drageoir ou tambour tournant) ou des extrudés. Le contrôle de la porosité de ces concassés se fait par le choix de la matière à base d'alumine que l'on concasse pour les obtenir.

Il peut aussi s'agir d'extrudés alumine. Ceux-ci peuvent être obtenus par malaxage, puis extrusion d'une matière à base d'alumine, ladite matière pouvant être issue de la déshydratation rapide d'hydrargillite ou de la précipitation d'un gel d'alumine. Le contrôle de la porosité de ces extrudés peut être réalisé par le choix de l'alumine mise en oeuvre et par les conditions de préparation de cette alumine ou par les conditions de malaxage de cette alumine avant extrusion. L'alumine peut ainsi être mélangée lors du malaxage à des porogènes. A titre d'exemple, les extrudés peuvent être préparés par le procédé décrit dans le brevet US-A-3 856 708.

Dans le cas du dopage de l'alumine par un ou plusieurs élément(s), ledit dopage peut être réalisé par toute méthode connue de l'homme de métier. Il peut, par exemple, être réalisé par imprégnation du support à base d'alumine par un ou des précurseur(s) de ces éléments ou par mélange du ou des précurseur(s) avec l'alumine au cours de la mise en forme de cette matière.

Dans le cas d'un dopage par exemple par imprégnation, celui-ci se fait de manière connue par mise en contact du support avec une solution, un sel et/ou un gel comprenant au moins un élément sous forme d'oxyde, de sel ou d'un de leurs précurseurs. Le support peut ensuite être soumis à une opération de séchage et éventuellement de calcination ; par exemple, le catalyseur peut être calciné à une température située entre 150 et 1000°C, de préférence entre 200 et 900°C.

Lors d'un dopage spécifique avec un halogène, on choisira comme précurseur un acide minéral halogéné et, de préférence, un composé organique halogéné.

Le catalyseur est utilisé dans des proportions pondérales allant en général de 0,1 à 10 % et, de préférence, de 0,5 à 5 % par rapport au poids total des silanes de formules (1) et (2) chargés au départ. Des proportions pondérales qui sont tout spécialement préférées, sont celles allant de 0,8 à 2 % par rapport à la même référence.

La température à laquelle est mise en oeuvre la réaction de redistribution est généralement égale ou supérieure à 130°C. Le temps de contact entre les silanes de formules (1) et (2) et l'alumine n'est pas critique et peut varier dans de larges limites selon notamment l'appareillage, la stoechiométrie de la réaction et la température choisie.

Des conditions préférées de température et de temps de contact sont les suivantes : températures allant de 140°C à 260°C et temps de contact allant de 15 minutes à 8 heures. Des conditions plus préférées sont les suivantes : températures allant de 150°C à 240°C et temps de contact allant de 30 minutes à 5 heures.

D'un point de vue pratique, le procédé est conduit dans un réacteur standard et fermé, permettant de mettre en contact du liquide et/ou des gaz avec un catalyseur hétérogène, en opérant sous pression autogène. Le procédé peut être mis en oeuvre en discontinu ou en continu : selon la première variante, il n'y a pas de contrainte au niveau de la mise en oeuvre des réactifs et du catalyseur qui peut être disposé sans inconvénient notamment en suspension dans une phase liquide ; selon l'autre variante, on peut conduire avantageusement la réaction de redistribution en continu dans un réacteur notamment tubulaire comportant le catalyseur solide disposé par exemple en lit fixe ou en lit agité.

La pression n'est pas un paramètre critique du procédé selon l'invention. Ainsi, on peut opérer sous des pressions allant de 2 à $50.10^5$Pa.

En fin de la période de chauffage, lorsque la réaction de redistribution est achevée (contrôle par exemple de la teneur en organohydrogénosilane chloré de redistribution qui est visé), on refroidit le milieu réactionnel à une température inférieure à 40°C, de préférence comprise entre 10 et 30°C, puis on établit le retour à la pression atmosphérique du milieu réactionnel, au besoin en réalisant un dégazage. On obtient ainsi une phase liquide, qui est séparée de la phase catalytique solide, comprenant l'organohydrogénosilane chloré de redistribution, lequel peut être récupéré de manière classique, par exemple, par distillation sous pression atmosphérique.

En ce qui concerne les deux types de silanes admis à réagir, c'est-à-dire l'organohydrogénosilane chloré de formule (1) et le silane organo-substitué et éventuellement chloré de formule (2), on fera noter que les symboles R et R' peuvent être choisis, par exemple, parmi les radicaux méthyle, éthyle, propyle, isopropyle, butyle, hexyle, phényle, naphtyle et diphényle.

De préférence les symboles R et R' sont semblables ou différents et représentent chacun un radical alkyle linéaire ou ramifié en $C_1$ - $C_3$ ou un radical phényle.

En tout état de cause, les symboles R et R', qui sont tout spécialement préférés, sont semblables ou différents et représentent chacun un méthyle ou un phényle.

Le procédé selon la présente invention s'applique bien à la mise en oeuvre d'une réaction de redistribution entre l'organohydrogénosilane chloré (1) de formule $RHSiCl_2$ et le silane organo-substitué et chloré (2) de formule $R'_3SiCl$ (dans ce cas a = 1, b = 1 et c = 3), formules dans lesquelles les symboles R et R' ont les significations générales données ci-avant, dans la présentation de l'invention, à propos des formules (1) et (2).

Le procédé selon la présente invention s'applique tout particulièrement bien à la mise en oeuvre d'une réaction de redistribution entre l'organohydrogénosilane chloré (1) de formule $RHSiCl_2$ et le silane organo-substitué et chloré (2) de formule $R'_3SiCl$ (dans ce cas a = 1, b = 1 et c = 3), formules dans lesquelles les symboles R et R' sont semblables ou différents et représentent chacun un radical alkyle linéaire ou ramifié en $C_1$ - $C_3$ ou un radical phényle.

Le procédé selon la présente invention s'applique tout spécialement bien à la mise en oeuvre d'une réaction de redistribution entre l'organohydrogénosilane chloré (1) de formule $RHSiCl_2$ et le silane organo-substitué et chloré (2) de formule $R'_3SiCl$, formules dans lesquelles les symboles R et R' sont semblables ou différents et représentent chacun un radical méthyle (en abréviation Me) ou phényle.

De façon générale, dans la conduite du procédé selon la présente invention, le réactif de type organohydrogénosilane chloré de formule (1) peut être présent dans le milieu de la réaction de redistribution à raison d'au moins 10 % en mole par rapport au mélange : organohydrogénosilane chloré de formule (1) + silane organo-substitué et éventuellement chloré de formule (2).

De préférence, le rapport molaire :

$$\frac{\text{organohydrogénosilane chloré de formule (1)}}{\text{silane organo-substitué de formule (2)}}$$

est compris entre 0, 1 et 2. De manière encore plus préférentielle, ce rapport molaire est compris entre 0,3 et 0,7.

Dans le cadre de la réaction de redistribution, à la mise en oeuvre de laquelle le procédé selon l'invention s'applique tout spécialement bien, faisant intervenir par exemple $MeHSiCl_2$ et $Me_3SiCl$ à titre des silanes (1) et (2) de départ, on récupère in fine un organohydrogénosilane chloré produit par redistribution consistant en $Me_2HSiCl$, et le composé $Me_2SiCl_2$.

Les exemples qui suivent, permettront de mieux comprendre toutes les variantes et les avantages (processabilité) du procédé selon l'invention, en mettant en exergue, par des tests comparatifs, la faible quantité de $Me_2HSiCl$ formée (pourcentage massique inférieur à 5 %) quand l'alumine mise en oeuvre ne répond pas aux caractéristiques selon l'invention.

EXEMPLES 1 à 3 et ESSAIS COMPARATIFS A à C

On travaille en discontinu dans un réacteur cylindrique de 75 ml, fait en "hastelloy" (matériau connu à base de nickel), disposé verticalement, agité par secousses et muni de moyens de chauffage et d'ouvertures appropriées pour l'arrivée d'un flux gazeux et pour l'introduction des réactifs et catalyseur.

L'intérieur du réacteur est d'abord mis sous courant d'argon pendant 5 minutes, puis ensuite on charge successivement :

- 0,5 g de catalyseur, sous forme de poudre dont les caractéristiques sont indiquées dans le tableau I donné ci-après, et
- 48 g d'un mélange formé de $Me_3SiCl$ (313 g) et de $MeHSiCl_2$ (16,7 g) pour obtenir un rapport molaire $MeHSiCl_2$ / $Me_3SiCl$ égal à 0,5.

TABLEAU I

| Alumine | $Na_2O$ ppm | Entité dopante | | Surface spécifique $m^2/g$ | Volume poreux total ml/100 g |
|---|---|---|---|---|---|
| | | Nature | % | | |
| 1 | 5 | - | - | 408 | 39 |
| 2 | 30 | Cl | 1 | 210 | 60 |
| 3 | 30 | - | - | 210 | 60 |
| 4 | 730 | - | - | 244 | 50 |
| 5 | 1200 | - | - | 171 | 55 |
| 6 | 4000 | - | - | 210 | 59 |

Le réacteur est fermé, mis sous agitation et chauffé à 160°C pendant 4 heures.

Au bout de ce temps, le réacteur est refroidi par trempage dans un mélange eau + glace, pendant 5 minutes de manière à amener son contenu à une température de 20°C. Puis il est ouvert, et on récupère le mélange réactionnel final dont la phase liquide est analysée par chromatographie en phase gazeuse en utilisant un appareil VARIAN équipé d'un détecteur à catharomètre. Les résultats obtenus sont reportés dans le tableau II suivant.

TABLEAU II

| Exemples | Catalyseur | Pourcentages massiques | | | |
|---|---|---|---|---|---|
| | | Me3 | MeH | Me2 | $Me_2H$ |
| Ex. 1 | Alumine 1 | 48,5 | 5,0 | 33,3 | 8,2 |
| Ex. 2 | Alumine 2 | 48,0 | 3,2 | 33,0 | 7,9 |
| Ex. 3 | Alumine 3 | 53,9 | 4,9 | 30,9 | 5,9 |
| Ex. comparatif A | Alumine 4 | 59,2 | 14,4 | 17,0 | 2,5 |
| Ex. comparatif B | Alumine 5 | 65,1 | 27,4 | 3,6 | 0,3 |
| Ex. comparatif C | Alumine 6 | 64,0 | 26,7 | 6,1 | 0,1 |
| Me3 = $Me_3SiCl$ ; MeH = $MeHSiCl_2$ ; Me2 = $Me_2SiCl_2$ ; Me2H = $Me_2HSiCl$ | | | | | |

EXEMPLE 4

On répète l'exemple 2, mais en opérant cette fois un chauffage du réacteur à 220°C pendant 4 heures. Les résultats obtenus sont rassemblés dans le tableau III suivant.

TABLEAU III

| Exemple | Catalyseur | Pourcentages massiques | | | |
|---|---|---|---|---|---|
| | | Me3 | MeH | Me2 | $Me_2H$ |
| 4 | Alumine 2 | 40,4 | 2,5 | 40,1 | 13,5 |

**Revendications**

1. Procédé d'obtention d'organosilanes comprenant une réaction de redistribution entre un organohydrogénosilane chloré de formule (1) $(R)_a(H)_b SiCl_{4-a-b}$ et un silane organo-substitué et éventuellement chloré de formule (2) $(R')_c SiCl_{4-c}$, formules dans lesquelles : a = 1 ou 2, b = 1 ou 2, a + b ≤ 3, c = 1, 2, 3 ou 4, les symboles R et R' sont semblables ou différents et représentent chacun un radical alkyle linéaire ou ramifié en $C_1$-$C_6$ ou un radical aryle en $C_6$-$C_{12}$, cette réaction de redistribution se déroulant en présence d'une quantité efficace d'un catalyseur à base d'un dérivé métallique, et ledit procédé étant **caractérisé en ce que** le catalyseur reste à l'état solide en présence des silanes réagissants (1) et (2) et consiste dans une alumine qui présente une teneur en métal alcalin M ou alcalino-terreux M', exprimée en ppm d'oxyde $M_2O$ ou M'O par rapport au poids de catalyseur (alumine comprenant notamment M ou M'), égale ou inférieure à 500 ppm.

2. Procédé selon la revendication 1, **caractérisé en ce que** l'alumine utilisée présente une teneur en métal alcalin ou alcalino-terreux qui est égale ou inférieure à 300 ppm.

3. Procédé selon la revendication 2, **caractérisé en ce que** la teneur en métal alcalin ou alcalino-terreux est égale ou inférieure à 100 ppm.

4. Procédé selon la revendication 1, **caractérisé en ce que** l'alumine utilisée comprend en outre dans sa structure une entité dopante consistant dans au moins un atome d'halogène et/ou dans au moins un atome d'un métal choisi dans le groupe des éléments des colonnes 5b et 6b et leurs mélanges, avec la condition selon laquelle la teneur en entité dopante, exprimée en % en poids d'atome(s) halogène et/ou d'atome(s) métallique(s) par rapport au poids de catalyseur (alumine comprenant l'entité dopante), est égale ou inférieure à 50 %.

5. Procédé selon la revendication 4, **caractérisé en ce que** la teneur en entité dopante est égale ou inférieure à 30 %.

6. Procédé selon la revendication 5, **caractérisé en ce que** la teneur en entité dopante se situe dans l'intervalle allant de 0,1 à 20 %.

7. Procédé selon la revendication 1 ou 4, **caractérisé en ce que** l'alumine utilisée possède encore :

   • une surface spécifique BET égale ou supérieure à 50 $m^2$/g, et
   • un volume poreux total égal ou supérieur à 15 ml/100 g.

8. Procédé selon la revendication 7, **caractérisé en ce que** l'alumine utilisée possède :

   • une surface spécifique BET égale ou supérieure à 80 $m^2$/g, et
   • un volume poreux total allant de 20 à 120 ml/100 g.

9. Procédé selon la revendication 8, **caractérisé en ce que** l'alumine utilisée possède :

   • une surface spécifique BET allant de 100 à 600 $m^2$/g, et
   • un volume poreux total allant de 25 à 80 ml/100 g.

10. Procédé selon l'une quelconque des revendications 1 à 9, **caractérisé en ce que** le catalyseur est utilisé dans des proportions pondérales allant de 0,1 à 10 % par rapport au poids total des silanes de formules (1) et (2) chargés au départ.

11. Procédé selon la revendication 10, **caractérisé en ce que** les proportions pondérales vont de 0,5 à 5 %.

12. Procédé selon l'une quelconque des revendications 1 à 11, **caractérisé en ce que** la température à laquelle est mise en oeuvre la réaction de redistribution est égale ou supérieure à 130°C.

13. Procédé selon la revendication 12, **caractérisé en ce que** la température se situe dans l'intervalle allant de 140 à 260°C.

14. Procédé selon l'une quelconque des revendications 1 à 13, **caractérisé en ce que**, s'agissant des deux types de silanes admis à réagir, c'est-à-dire l'organohydrogénosilane chloré de formule (1) et le silane organo-substitué et éventuellement chloré de formule (2), les symboles R et R' sont semblables ou différents et représentent chacun un radical alkyle linéaire ou ramifié en $C_1$ - $C_3$ ou un radical phényle.

15. Procédé selon l'une quelconque des revendications 1 à 14, **caractérisé en ce que** l'on réalise une réaction de redistribution entre l'organohydrogénosilane chloré (1) de formule $RHSiCl_2$ et le silane organo-substitué et chloré (2) de formule $R'_3SiCl$ (dans ce cas a = 1, b = 1 et c = 3).

16. Procédé selon l'une quelconque des revendications 1 à 16, **caractérisé en ce que** le rapport molaire :

$$\frac{\text{organohydrogénosilane chloré de formule (1)}}{\text{silane organo-substitué de formule (2)}}$$

est compris entre 0, 1 et 2.

**Patentansprüche**

1. Verfahren zur Herstellung von Organosilanen, umfassend eine Redistributionsreaktion zwischen einem chlorierten Organohydrogensilan der Formel (1) $(R)_a(H)_bSiCl_{4-a-b}$ und einem organosubstituierten und gegebenenfalls chlorierten Silan der Formel (2) $(R')_cSiCl_{4-c}$, worin a = 1 oder 2, b = 1 oder 2, a + b ≤ 3, c = 1, 2, 3 oder 4, die Symbole R und R' ähnlich oder unterschiedlich sind und jeweils einen linearen oder verzweigten $C_1$-$C_6$-Alkyl-Rest oder einen $C_6$-$C_{12}$-Aryl-Rest darstellen, wobei die Redistributionsreaktion in Gegenwart einer wirksamen Menge eines Katalysators auf der Basis eines Metallderivats abläuft und das Verfahren **dadurch gekennzeichnet ist, daß** der Katalysator in Gegenwart der reagierenden Silane (1) und (2) in festem Zustand bleibt und aus einem Aluminiumoxid besteht, das einen Gehalt an Alkalimetall M oder Erdalkalimetall M', ausgedrückt als ppm an Oxid $M_2O$ oder M'O, bezogen auf das Gewicht des Katalysators (Aluminiumoxid, das insbesondere M oder M' enthält), von 500 ppm oder weniger aufweist.

2. Verfahren nach Anspruch 1, **dadurch gekennzeichnet, daß** das verwendete Aluminiumoxid einen Gehalt an Alkalimetall oder Erdalkalimetall aufweist, der 300 ppm oder weniger ist.

3. Verfahren nach Anspruch 2, **dadurch gekennzeichnet, daß** der Gehalt an Alkalimetall oder Erdalkalimetall 100 ppm oder weniger ist.

4. Verfahren nach Anspruch 1, **dadurch gekennzeichnet, daß** das verwendete Aluminiumoxid in seiner Struktur außerdem eine Dotierungseinheit umfaßt, die aus mindestens einem Halogenatom und/oder mindestens einem Metallatom, ausgewählt aus der Gruppe der Elemente der Gruppen 5b und 6b und ihren Gemischen, besteht, unter der Bedingung, daß der Gehalt an Dotierungseinheit, ausgedrückt als Gew.-% Halogenatom(e) und/oder Metallatom(e), bezogen auf das Gewicht des Katalysators (Aluminiumoxid, das die Dotierungseinheit enthält), 50 % oder weniger ist.

5. Verfahren nach Anspruch 4, **dadurch gekennzeichnet, daß** der Gehalt an Dotierungseinheit 30 % oder weniger ist.

6. Verfahren nach Anspruch 5, **dadurch gekennzeichnet, daß** der Gehalt an Dotierungseinheit im Bereich von 0,1 bis 20 % liegt.

7. Verfahren nach Anspruch 1 oder 4, **dadurch gekennzeichnet, daß** das verwendete Aluminiumoxid noch

   - eine spezifische Oberfläche nach BET von 50 $m^2/g$ oder mehr und
   - ein Gesamtporenvolumen von 15 ml/100 g oder mehr besitzt.

8. Verfahren nach Anspruch 7, **dadurch gekennzeichnet, daß** das verwendete Aluminiumoxid

   - eine spezifische Oberfläche nach BET von 80 $m^2/g$ oder mehr und
   - ein Gesamtporenvolumen, das zwischen 20 und 120 ml/g liegt, besitzt.

9. Verfahren nach Anspruch 8, **dadurch gekennzeichnet, daß** das verwendete Aluminiumoxid

- eine spezifische Oberfläche nach BET, die zwischen 100 und 600 m$^2$/g liegt, und
- ein Gesamtporenvolumen, das zwischen 25 und 80 ml/100 g liegt, besitzt.

**10.** Verfahren nach einem der Ansprüche 1 bis 9, **dadurch gekennzeichnet, daß** der Katalysator in Gewichtsverhältnissen verwendet wird, die zwischen 0,1 und 10 %, bezogen auf das Gesamtgewicht der Silane der Formeln (1) und (2), die zu Beginn eingefüllt werden, liegt.

**11.** Verfahren nach Anspruch 10, **dadurch gekennzeichnet, daß** die Gewichtsverhältnisse zwischen 0,5 und 5 % liegen.

**12.** Verfahren nach einem der Ansprüche 1 bis 11, **dadurch gekennzeichnet, daß** die Temperatur, bei der die Redistributionsreaktion durchgeführt wird, 130°C oder höher ist.

**13.** Verfahren nach Anspruch 12, **dadurch gekennzeichnet, daß** die Temperatur in einem Bereich von 140 bis 260°C liegt.

**14.** Verfahren nach einem der Ansprüche 1 bis 13, **dadurch gekennzeichnet, daß** zwei Silan-Typen reagieren gelassen werden, nämlich das chlorierte Organohydrogensilan der Formel (1) und das organosubstituierte und gegebenenfalls chlorierte Silan der Formel (2), worin die Symbole R und R' ähnlich oder unterschiedlich sind und jeweils einen linearen oder verzweigten $C_1$-$C_3$-Alkyl-Rest oder einen Phenyl-Rest darstellen.

**15.** Verfahren nach einem der Ansprüche 1 bis 14, **dadurch gekennzeichnet, daß** man die Redistributionsreaktion zwischen dem chlorierten Organohydrogensilan (1) der Formel RHSiCl$_2$ und dem organosubstituierten und chlorierten Silan (2) der Formel R'$_3$SiCl (in diesem Fall a=1, b=1 und c=3) durchführt.

**16.** Verfahren nach einem der Ansprüche 1 bis 16, **dadurch gekennzeichnet, daß** das molare Verhältnis

$$\frac{\text{chloriertes Organohydrogensilan der Formel (1)}}{\text{organosubstituiertes Silan der Formel (2)}}$$

0, 1 oder 2 ist.

**Claims**

**1.** Process for obtaining organosilanes, comprising a redistribution reaction between a chlorinated organohydrosilane of formula (1) $(R)_a(H)_b SiCl_{4-a-b}$ and an organo-substituted and optionally chlorinated silane of formula (2) $(R')_c SiCl_{4-c}$, in which formulae a = 1 or 2, b = 1 or 2, a + b ≤ 3, c = 1, 2, 3 or 4, the symbols R and R' are identical or different and each represent a linear or branched $C_1$-$C_6$ alkyl radical or a $C_6$-$C_{12}$ aryl radical, the said redistribution reaction proceeding in the presence of an effective amount of a catalyst based on a metal derivative, and the said process being **characterized in that** the catalyst remains in the solid state in the presence of the reacting silanes (1) and (2) and consists of an alumina which has an alkali metal M or alkaline earth metal M' content, expressed in ppm of oxide $M_2O$ or M'O relative to the weight of catalyst (alumina comprising in particular M or M'), of less than or equal to 500 ppm.

**2.** Process according to claim 1, **characterized in that** the alumina used has an alkali metal or alkaline earth metal content of less than or equal to 300 ppm.

**3.** Process according to claim 2, **characterized in that** the alkali metal or alkaline earth metal content is less than or equal to 100 ppm.

**4.** Process according to claim 1, **characterized in that** the alumina used comprises in its structure, in addition, a doping entity consisting of at least one halogen atom and/or of at least one atom of a metal selected from the group of the elements of groups 5b and 6b and mixtures thereof, with the proviso that the doping entity content, expressed in % by weight of halogen atom(s) and/or metal atom(s) relative to the weight of catalyst (alumina comprising the doping entity), is less than or equal to 50%.

**5.** Process according to claim 4, **characterized in that** the doping entity content is less than or equal to 30%.

6. Process according to claim 5, **characterized in that** the doping entity content is within the range from 0.1 to 20%.

7. Process according to claim 1 or 4, **characterized in that** the alumina used also possesses:

- a BET specific surface area greater than or equal to 50 m$^2$/g, and
- a total pore volume greater than or equal to 15 ml/100 g.

8. Process according to claim 7, **characterized in that** the alumina used also possesses:

- a BET specific surface area greater than or equal to 80 m$^2$/g, and
- a total pore volume ranging from 20 to 120 ml/100 g.

9. Process according to claim 8, **characterized in that** the alumina used also possesses:

- a BET specific surface area ranging from 100 to 600 m$^2$/g, and

- a total pore volume ranging from 25 to 80 ml/100 g.

10. Process according to any one of claims 1 to 9, **characterized in that** the catalyst is used in proportions by weight which range from 0.1 to 10% relative to the total weight of the silanes of formulae (1) and (2) introduced at the beginning.

11. Process according to claim 10, **characterized in that** the proportions by weight range from 0.5 to 5%.

12. Process according to any one of claims 1 to 11, **characterized in that** the temperature at which the redistribution reaction is implemented is greater than or equal to 130°C.

13. Process according to claim 12, **characterized in that** the temperature is within the range from 140 to 260°C.

14. Process according to any one of claims 1 to 13, **characterized in that**, in relation to the two types of silane which are introduced for reaction, namely the chlorinated organohydrosilane of formula (1) and the organo-substituted and optionally chlorinated silane of formula (2), the symbols R and R' are identical or different and each represent a linear or branched $C_1$-$C_3$ alkyl radical or a phenyl radical.

15. Process according to any one of claims 1 to 14, **characterized in that** a redistribution reaction is carried out between the chlorinated organohydrosilane (1) of formula $RHSiCl_2$ and the organo-substituted and chlorinated silane (2) of formula $R'_3SiCl$ (in this case a = 1, b = 1 and c = 3).

16. Process according to any one of claims 1 to 16, **characterized in that** the molar ratio

$$\frac{\text{chlorinated organohydrosilane of formula (1)}}{\text{organo - substituted silane of formula (2)}}$$

is between 0.1 and 2.